# EUROPÄISCHE PATENTSCHRIFT

(11) **EP 1 873 418 B1**
(45) Veröffentlichungstag und Bekanntmachung des Hinweises auf die Patenterteilung: **14.09.2011**
(21) Anmeldenummer: 07007064.4
(22) Anmeldetag: 04.04.2007
(51) Int. Cl.: F16D 65/10, F16D 51/00

(54) **Trommelbremse mit keramischen Reibflächen**
Drum brake with ceramic friction surfaces
Frein à tambour avec surfaces de frottement en céramique

(30) Priorität: 30.06.2006 DE 102006030301
(43) Veröffentlichungstag der Anmeldung: 02.01.2008
(73) Patentinhaber: AUDI AG, 85045 Ingolstadt (DE)
(72) Erfinder: Bruch, Christian, 83666 Waakirchen (DE)
(74) Vertreter: Asch, Konrad

(56) Entgegenhaltungen:
- EP-A- 0 201 760
- EP-A- 1 028 267
- DE-A1- 3 640 212
- DE-B- 1 193 745
- US-A- 2 582 755
- US-B1- 6 196 359
- US-B1- 6 290 031
- US-B1- 6 601 284

## Beschreibung

Die vorliegende Erfindung betrifft Trommelbremsen mit keramischen Reibflächen.

Derzeit werden in Fahrzeugen zwei unterschiedliche Systeme von Bremsen eingesetzt, Scheibenbremsen und Trommelbremsen. Während Scheibenbremsen für höhere Bremsleistungen bevorzugt eingesetzt werden wegen der besseren Wärmeabführung und der einfacheren Möglichkeit, die Bremsbeläge zu überprüfen und zu wechseln, werden Trommelbremsen für geringere Bremsleistungen wegen ihrer einfacheren Konstruktion und ihrer Unempfindlichkeit gegenüber Verschmutzung bevorzugt.

Trommelbremsen enthalten als wesentliche Komponenten ein zylinderförmiges umlaufendes Gehäuse (Trommel), an das beim Bremsen von innen (so verwendet in Fahrzeugen) oder von außen (verwendet beispielsweise bei Maschinenbremsen) drehbar oder schwenkbar gelagerte, ansonsten feststehende Bremsbacken gepreßt werden. Bei großer Wärmeentwicklung dehnt sich die Trommel aus, wobei bei innenliegenden Bremsbacken in üblicher Bauart diese an der Innenwand der Trommel nicht mehr vollständig anliegen und die Bremse daher an Wirkung verliert. Das Betätigen (Stellen) der Bremsbacken erfolgt üblicherweise durch Hydraulikzylinder im Inneren der Trommel oder über drehbare Exzenter von außen.

Das Dokument US 2 582 755 offenbart eine Trommelbremse gemäß dem Oberbegriff des Anspruchs 1.

Die robustere Ausführungsform läßt Trommelbremsen attraktiv erscheinen, wenn es gelingt, die immanenten Nachteile gegenüber den Scheibenbremsen wie insbesondere die geringere Bremsleistung zu überwinden.

Es wurde nun gefunden, daß die Verwendung von keramischen Reibmaterialien zu einer erheblichen Verbesserung der Bremsleistung führt, ohne daß die bisher bei Trommelbremsen als gegeben erachteten Nachteile der schlechteren Wärmeabführung für die Eignung prohibitiv wären.

Die Erfindung betrifft daher eine Trommelbremse mit den Merkmalen des Anspruchs 1.

Die Erfindung wird durch die angelegten Zeichnungen erläutert. Dabei zeigen die
- Fig. 1: eine Draufsicht auf einen Schnitt senkrecht zur Achse durch eine Trommelbremse 1 mit mindestens einer keramischen Reibschicht an einer der zusammenwirkenden Reibflächen, nämlich der als Rotor wirkenden Trommelinnenfläche 11 und/oder den mit ihr als Stator zusammenwirkenden Bremsbacken 14,
- Fig. 2: einen Schnitt längs der Linie II-II durch eine Trommelbremse 1 in einer die in der Zeichnung nicht dargestellten Achse enthaltenden Ebene, wobei zur Verbesserung der Übersichtlichkeit der Aktuator ebenfalls nicht dargestellt ist,
- Fig. 3: eine Draufsicht in Richtung der Achse auf eine Bremsbacke 14 mit einer Lagerung durch eine Kombination von Bolzen und Rundloch und eine Kombination von Bolzen und Langloch,
- Fig.4: ein Detail IV eines Schnitts gemäß Fig. 2, wobei in dieser Ausführung die Spitze der Bremsbacke 14 gebrochen ist, wodurch an der Berührungsstelle der Spitze der Bremsbacke 14 und der keilförmigen Nut 112 der Bremstrommel ein Lumen entsteht, und
- Fig. 5: ein Detail V eines Schnitts gemäß Fig. 2, wobei in dieser Ausführung der achsferne Grund der keilförmigen Nut 112 der Bremstrommel eine zusätzliche Ausnehmung mit rechteckförmigem oder verrundetem Querschnitt aufweist, wodurch an der Berührungsstelle der Spitze der Bremsbacke 14 und der keilförmigen Nut 112 der Bremstrommel ein Lumen entsteht.

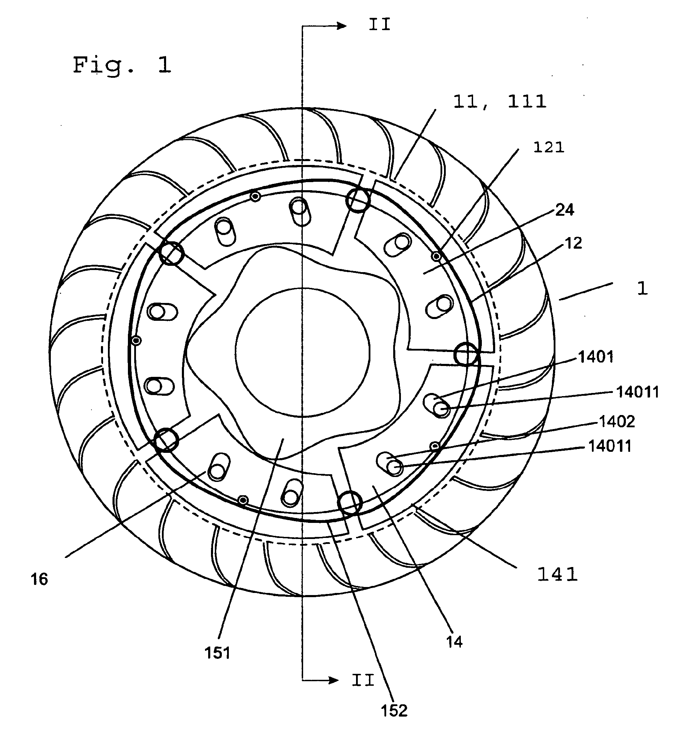

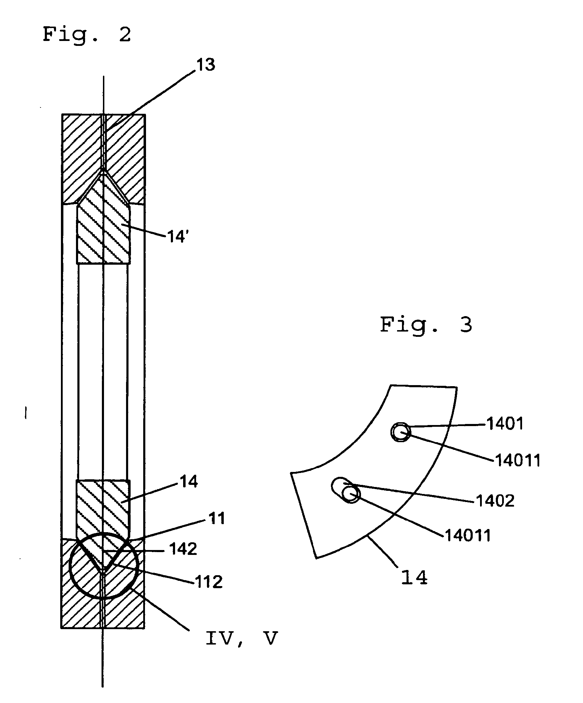

Im einzelnen zeigt die Fig. 1 einen Schnitt senkrecht zur Achse durch eine Anordnung umfassend eine Trommelinnenfläche 11 und die mit ihr zusammenwirkenden Bremsbacken 14, wobei in dieser bevorzugten Ausführungsform sowohl die Trommelinnenfläche als auch die Bremsbacken mit keramischen Reibschichten 111, 141 ausgeführt sind. Die Bremsbacken 14 sind zumindest am peripheren Teil 142 mit keilförmigem Querschnitt ausgebildet und greifen in eine keilförmig ausgebildete Nut 112 in der Trommelinnenfläche ein (Fig. 2). Hier sind zwei Bremsbacken 14, 14' dargestellt, die durch eine Betätigungseinrichtung umfassend einen Aktuator 151 und eine Rückholeinrichtung 12, 152 in Eingriff mit der Trommelinnenfläche gebracht werden und wieder gelöst werden. Bevorzugt weisen die Bremsbacken 14 einen sichelförmigen Querschnitt auf. Der Aktuator 151 ist hier als Nockenscheibe ausgebildet, die im Zusammenwirken mit den Bremsbacken 14 durch Verdrehen der Nockenscheibe 151 die Bremsbacken 14 nach außen in Richtung der Trommelinnenfläche 11 drückt. Bevorzugt ist der keramische Werkstoff der Reibschichten 111, 141 eine mit Fasern aus Kohlenstoff verstärkte Siliciumcarbid-Keramik ("C-SiC"). Es ist jedoch im Rahmen der Erfindung auch möglich, andere Keramik-Werkstoffe beispielsweise basierend auf oxidischen Keramiken wie Aluminiumoxid, oder mit Fasern aus Kohlenstoff verstärkten Kohlenstoff einzusetzen. Die geschlossene Bauweise ermöglicht für den letzteren Fall auch die Anwendung von Schutzgasen, wodurch der Hinderungsgrund der oxydativen Empfindlichkeit solcher Systeme entfällt.

Die Trommelbremse 1 gemäß der Erfindung weist mindestens eine keramische Reibschicht auf an einer der zusammenwirkenden Reibflächen ausgewählt aus der als Rotor wirkenden Trommelinnenfläche 11 und den mit ihr als Stator zusammenwirkenden Bremsbacken 14. Bevorzugte Ausführungsformen ergeben sich aus den Unteransprüchen.

In einer bevorzugten Ausführungsform ist in der Mitte der keilförmigen Nut 112 mindestens ein nach außen offener Kanal 13 eingebracht, der radial nach außen weist und bevorzugt einen kreisförmigen Querschnitt aufweist; es ist besonders bevorzugt, derartige Kanäle 13 über den gesamten Umfang der keilförmigen Nut zu verteilen.

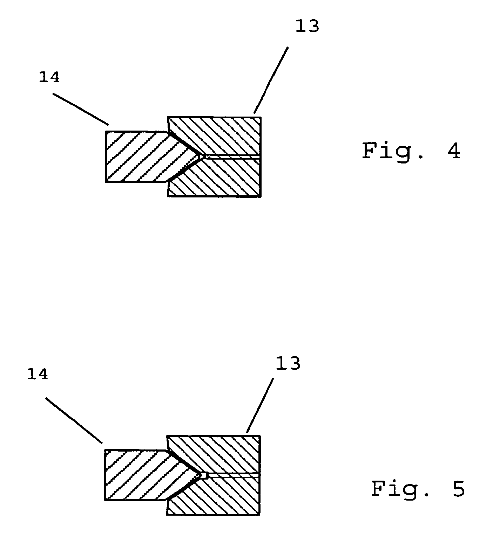

Die Fig. 2 zeigt den Schnitt II-II gemäß Fig. 1, wobei zur Verbesserung der Übersichtlichkeit hier lediglich die Bremsbacken 14, 14' und die Bremstrommel 13 dargestellt sind. Die Trommelinnenfläche 11 weist das Profil eines mit der Spitze nach außen, vom Zentrum hinweg, gerichteten "V" auf, in das der mit keilförmigem Querschnitt ausgebildete achsferne periphere Bereich 142 der Bremsbacke 14 eingreift. Verschiedene Ausführungsarten des als "IV, V" bezeichneten Detailbereichs sind in den Figuren 4 und 5 dargestellt, wobei ein zur Aufnahme von Staub und Abrieb bestimmtes Lumen einmal gemäß Fig. 4 durch Brechen der Spitze des keilförmigen Bereichs 142 der Bremsbacke 14 zusammen mit dem V-förmigen Grund des Profils der keilförmigen Nut 112 der Bremstrommel gebildet wird, und in einer anderen Ausführung gemäß Fig. 5 durch Vertiefen des Grundes des V-förmigen Profils der Bremstrommel 13 mit einer zusätzlichen rechteckförmigen oder verrundeten Ausnehmung. Die Ausnehmung gemäß Fig. 5 und die gebrochene Kante gemäß Fig. 4 erstrecken sich selbstverständlich über den gesamten Umfang der Trommelinnenfläche bzw. die Länge der Bremsbacke. Aus fertigungstechnischen Gründen ist anstelle der rechteckförmigen Ausnehmung wie in Fig. 5 dargestellt eine Form vorzuziehen, bei der die Kanten am Grund der Ausnehmung verrundet sind, ebenso wie ein verrundetes Profil der Bremsbacke 14 gemäß Fig. 4. In der Fig. 3 ist eine Ausführungsform der Führung einer Bremsbacke 14 durch eine Kombination eines Bolzens 14011 mit einem kreisförmigen Loch 1401 einerseits und einem Bolzen 14011 in Zusammenwirken mit einem Langloch 1402 gezeigt. Es ist jedoch bevorzugt, beide Führungen mit Langlöchern auszubilden, wie in Fig. 1 dargestellt.

Es werden bevorzugt mindestens zwei Bremsbacken 14 vorgesehen. Aus fertigungs- und betätigungstechnischen Gründen werden im Fall der in den Zeichnungen dargestellten Bremsbacken maximal 12 Bremsbacken bevorzugt. Besonders günstig sind ungerade Anzahlen von Bremsbacken, wobei bei ungeraden Anzahlen die Geräuschentwicklung niedriger ist als bei geraden. Die Bremsbacken 14 werden durch jeweils mindestens zwei Führungen 1401, 14011, 1402, 14011 geführt, wobei mindestens eine der Führungen durch eine Kombination von einem Bolzen 14011 und einem Langloch 1402 gebildet wird. Werden beide Führungen mit Langlöchern ausgeführt, so ist es weiter im Fall der mechanischen Betätigung durch eine Nockenscheibe bevorzugt, mehr als eine, insbesondere mindestens zwei Nocken für je eine Bremsbacke vorzusehen, wobei durch die Vielzahl an Nocken sichergestellt werden kann, daß die umfangsseitige Kante und die umfangsseitigen Flächen der Bremsbacken spätestens beim reibenden Eingriff mit der Trommelinnenfläche stets konzentrisch zur Achse stehen. Anstelle der in den Zeichnungen dargestellten Führung ist auch eine Führung durch Stege möglich und vorteilhaft.

Das für Trommelbremsen charakteristische Problem der unterschiedlichen Wirkung der beiden Bremsbacken (auflaufender und ablaufender Bremsbacken) in der Ausführung mit zwei Backen läßt sich in der Bauweise gemäß der Erfindung vermeiden, wenn beide oder in Ausführungen mit mehr als zwei Bremsbacken, bevorzugt alle Bremsbacken als auflaufende Backen angeordnet sind. In einer solchen Ausführung wirken allerdings beim Rückwärtsfahren dann diese Backen als ablaufende Bremsbacken, mit entsprechend verminderter Bremswirkung, was aber für diese Betriebsweise toleriert werden kann.

Die Bremsbacken werden jeweils durch eine oder mehrere Rückholfedern 12, 152 in die Ruhestellung zurückbewegt, wenn der sie betätigende Aktuator 151 in seine Ausgangslage zurückkehrt oder der Druck nachläßt, mit dessen Hilfe der Aktuator 151 gestellt wird. Vorteilhafterweise kann auch eine gemeinsame Feder 12, 152 verwendet werden, so wie dies in der Fig. 1 dargestellt ist, wobei die Feder an Stützpunkten 121 gelagert ist.

Es ist im Rahmen der Erfindung selbstverständlich auch möglich, die Bremsbacken durch elektromechanische Aktuatoren, wie piezoelektrische oder elektromagnetische Aktuatoren, oder durch pneumatische oder hydraulische Aktuatoren direkt und einzeln zu betätigen. Werden die Bremsbacken in Form von Stiften oder flachen Quadern gemäß Anspruch 15 ausgeführt, so ist eine Führung durch Buchsen bevorzugt. Durch den geringeren Raumbedarf in diesem Fall, insbesondere im Fall von Bremsstiften, lassen sich erheblich größere Anzahlen dieser Bremsstifte realisieren, beispielsweise bis zu 100 Bremsstiften.

Die Kanäle können in radialer Richtung durch Hartbearbeitung (Bohren, in leitfähigen Keramikwerkstoffen wie mit Silicium gebundenem Siliciumcarbid (SiSiC) auch durch Funkerosion) eingearbeitet werden. Eine andere Möglichkeit ist bei der Fertigung des Trommelinnenbelags aus zwei Halbscheiben, durch Bearbeitung der Halbscheiben in der Trennebene die Kanäle zu formen, wobei man in diesem Fall nicht auf radiale Kanäle beschränkt ist, sondern diese auch, wie in der Fig. 1 dargestellt, mit evolventenförmiger Kontur ausführen kann.

Bei Betriebsversuchen mit einer Trommelbremse gemäß der Ausführungsform von Fig. 1 hat sich gezeigt, daß das ansonsten bei Trommelbremsen problematische schnelle Fading beim Erhitzen durch größere Bremsleistung ausbleibt, aber der bessere Schutz auch in korrosiven Umgebungen (Feuchtigkeit, Salzwasser) und vor mechanischer Beschädigung den erwarteten Vorteil bietet. Insbesondere bei rauhen Betriebsbedingungen sind daher erfindungsgemäße Trommelbremsen den dagegen empfindlicheren Scheibenbremsen mit keramischen Bremsringen vorzuziehen.

Es hat sich bei diesen Betriebsversuchen weiter in überraschender Weise ergeben, daß bei Betrieb einer Trommelbremse gemäß der vorliegenden Erfindung, wobei mindestens eine der zusammenwirkenden Reibflächen aus einem keramischen Werkstoff ausgeführt ist, keine störende Geräuschentwicklung auftrat, im Gegensatz zu Scheibenbremsen mit keramischen Reibpaarungen.

### Bezugszeichenliste

- 1: Trommelbremse
- 11: Trommelinnenfläche
- 111: keramische Reibschicht
- 112: keilförmige Nut in der Trommelinnenfläche
- 12, 152: Rückholfeder
- 121: Befestigungspunkt für Rückholfeder
- 13: Kanal
- 14, 14': Bremsbacken
- 1401: Führungsloch
- 14011: Bolzen
- 1402: Führungs-Langloch
- 141: keramische Reibschicht
- 142: keilförmiger Bereich der Bremsbacke 14
- 151: Aktuator, Nockenscheibe
- 16: Führung

## Patentansprüche

1. Trommelbremse (1) mit mindestens einer Reibschicht an einer der zusammenwirkenden Reibflächen ausgewählt aus der als Rotor wirkenden Trommelinnenfläche (11) und den mit ihr als Stator zusammenwirkenden Bremsbacken (14), wobei die Bremsbacken (14) zumindest am peripheren Teil (142) mit keilförmigem Querschnitt ausgebildet sind und in eine keilförmig ausgebildete Nut (112) in der Trommelinnenfläche eingreifen, sowie ein zur Aufnahme von Staub und Abrieb bestimmtes Lumen durch Brechen der Spitze des keilförmigen Bereichs (142) der Bremsbacke (14) zusammen mit dem V-förmigen Grund des Profils der keilförmigen Nut (112) der Bremstrommel gebildet ist, oder durch Vertiefen des Grundes des V-förmigen Profils der Bremstrommel (13) mit einer zusätzlichen rechteckförmigen oder verrundeten Ausnehmung gebildet ist, **dadurch gekennzeichnet, dass** die Reibschicht eine keramische Reibschicht ist und in der Mitte der keilförmigen Nut (112) mindestens zwei nach außen offene Kanäle (13) eingebracht sind.

2. Trommelbremse (1) nach Anspruch 1, **dadurch gekennzeichnet, dass** sowohl die Trommelinnenfläche (11) als auch die mit ihr zusammenwirkenden Bremsbacken (14) keramische Reibschichten (111, 141) aufweisen.

3. Trommelbremse (1) nach Anspruch 1, **dadurch gekennzeichnet, dass** mindestens zwei Bremsbacken (14, 14') vorgesehen sind, die durch eine Betätigungseinrichtung umfassend einen Aktuator (151) und eine Rückholeinrichtung (12, 152) in Eingriff mit der Trommelinnenfläche gebracht werden und wieder gelöst werden.

4. Trommelbremse (1) nach Anspruch 1, **dadurch gekennzeichnet, dass** die keramische Reibschicht (111, 141) eine mit Fasern aus Kohlenstoff verstärkte Siliciumcarbid-Keramik ist.

5. Trommelbremse (1) nach Anspruch 3, **dadurch gekennzeichnet, dass** der Aktuator (151) mechanisch auf die Bremsbacken (14) nach außen in Richtung der Trommelinnenfläche (11) drückt.

6. Trommelbremse (1) nach Anspruch 3, **dadurch gekennzeichnet, dass** der Aktuator (151) durch ein elektromechanisches Stellglied betätigt wird ausgewählt aus einem piezoelektrischen und einem elektromagnetischen Stellglied.

7. Trommelbremse (1) nach Anspruch 3, **dadurch gekennzeichnet, dass** der Aktuator (151) durch ein mechanisches Stellglied betätigt wird ausgewählt aus einem pneumatischen und einem hydraulischen Stellglied.

8. Trommelbremse (1) nach Anspruch 3, **dadurch gekennzeichnet, dass** der Aktuator als Nockenscheibe (151) ausgebildet ist, mit mindestens einer Nocke je Bremsbacke, wobei die Bremsbacken (14) durch Verdrehen der Nockenscheibe (151) in Richtung auf die Trommelinnenfläche (11) gedrückt werden.

9. Trommelbremse (1) nach Anspruch 8, **dadurch gekennzeichnet, dass** die Bremsbacken (14) einen sichelförmigen Querschnitt aufweisen.

10. Trommelbremse (1) nach Anspruch 1, **dadurch gekennzeichnet, dass** die in der Mitte der keilförmigen Nut (112) eingebrachten nach außen offenen Kanäle (13) rotationssymmetrisch über den gesamten Umfang verteilt sind.

11. Trommelbremse (1) nach Anspruch 1, **dadurch gekennzeichnet, dass** eine ungerade Anzahl von Bremsbacken (14) vorgesehen ist.

12. Trommelbremse (1) nach Anspruch 8, **dadurch gekennzeichnet, dass** die Bremsbacken (14) durch jeweils mindestens zwei Führungen (1401, 14011, 1402, 14011) in radialer Richtung geführt werden, wobei mindestens eine der Führungen durch eine Kombination von einem Bolzen (14011) und einem Langloch (1402) gebildet wird.

13. Trommelbremse (1) nach Anspruch 3, **dadurch gekennzeichnet, dass** die Bremsbacken durch Stege oder Buchsen geführt werden.

14. Trommelbremse (1) nach Anspruch 13, **dadurch gekennzeichnet, dass** die Bremsbacken in Form von an der Eingriffsfläche mit der Trommelinnenfläche verrundeten Stiften oder flachen Quadern ausgeführt sind, und in Buchsen gefiihrt sind.

## Claims

1. Drum brake (1) having at least one friction layer on one of the interacting friction surfaces selected from the drum inner surface (11), which acts as a rotor, and the brake shoes (14) which interact therewith as a stator, the brake shoes (14) being formed, at least on the peripheral part (142), with a wedge-shaped cross section and engaging into a wedge-shaped groove (112) in the drum inner surface, and a lumen for receiving dust and abraded material being formed by breaking the tip of the wedge-shaped region (142) of the brake shoe (14) together with the V-shaped base of the profile of the wedge-shaped groove (112) of the brake drum, or being formed by deepening the base of the V-shaped profile of the brake drum (13) with an additional rectangular or rounded recess, **characterized in that** the friction layer is a ceramic friction layer and at least two outwardly open ducts (13) are formed in the centre of the wedge-shaped groove (112).

2. Drum brake (1) according to Claim 1, **characterized in that** both the drum inner surface (11) and also the brake shoes (14) which interact therewith have ceramic friction layers (111, 141).

3. Drum brake (1) according to Claim 1, **characterized in that** at least two brake shoes (14, 14') are provided which are placed in engagement with the drum inner surface, and released again, by means of an activation device comprising an actuator (151) and a restoring device (12, 152).

4. Drum brake (1) according to Claim 1, **characterized in that** the ceramic friction layer (111, 141) is a carbon-fibre-reinforced silicon carbide ceramic.

5. Drum brake (1) according to Claim 3, **characterized in that** the actuator (151) presses mechanically on the brake shoes (14) outwards in the direction of the drum inner surface (11).

6. Drum brake (1) according to Claim 3, **characterized in that** the actuator (151) is activated by an electromechanical control element selected from a piezoelectric and an electromagnetic control element.

7. Drum brake (1) according to Claim 3, **characterized in that** the actuator (151) is activated by a mechanical control element selected from a pneumatic and a hydraulic control element.

8. Drum brake (1) according to Claim 3, **characterized in that** the actuator is designed as a cam disc (151) having at least one cam per brake shoe, the brake shoes (14) being pressed in the direction of the drum inner surface (11) by means of a rotation of the cam disc (151).

9. Drum brake (1) according to Claim 8, **characterized in that** the brake shoes (14) have a sickle-shaped cross section.

10. Drum brake (1) according to Claim 1, **characterized in that** the outwardly open ducts (13) formed in the centre of the wedge-shaped groove (112) are distributed rotationally symmetrically over the entire circumference.

11. Drum brake (1) according to Claim 1, **characterized in that** an uneven number of brake shoes (14) are provided.

12. Drum brake (1) according to Claim 8, **characterized in that** the brake shoes (14) are guided in the radial direction by in each case at least two guides (1401, 14011, 1402, 14011), at least one of the guides being formed by a combination of a pin (14011) and a slot (1402).

13. Drum brake (1) according to Claim 3, **characterized in that** the brake shoes are guided by webs or bushes.

14. Drum brake according to Claim 13, **characterized in that** the brake shoes are designed in the form of pins which are rounded at the engagement surface with the drum inner surface or as or flat cuboids, and are guided in bushes.

## Revendications

1. Frein à tambour (1) comprenant au moins une couche de frottement sur l'une des surfaces de frottement coopérantes, sélectionnées à partir de la surface intérieure du tambour (11) servant de rotor et des mâchoires de frein (14) coopérant avec elle en tant que stator, les mâchoires de frein (14) étant réalisées au moins sur la partie périphérique (142) avec une section transversale en forme de coin, et venant en prise dans la surface intérieure du tambour dans une rainure (112) réalisée en forme de coin, et une lumière prévue pour recevoir la poussière et l'usure étant formée par rupture de la pointe de la région en forme de coin (142) de la mâchoire de frein (14) conjointement avec la base du profilé en forme de V de la rainure en forme de coin (112) du tambour de frein, ou étant formée par creusage de la base du profilé en forme de V du tambour de frein (13) avec un évidement supplémentaire rectangulaire ou arrondi, **caractérisé en ce que** la couche de frottement est une couche de frottement céramique et au moins deux canaux ouverts vers l'extérieur (13) sont pratiqués au centre de la rainure en forme de coin (112).

2. Frein à tambour (1) selon la revendication 1, **caractérisé en ce que** la surface intérieure du tambour (11) ainsi que les mâchoires de frein (14) coopérant avec elle présentent des couches de frottement céramiques (111, 141).

3. Frein à tambour (1) selon la revendication 1, **caractérisé en ce qu'**au moins deux mâchoires de frein (14, 14') sont prévues, lesquelles sont amenées en prise avec la surface intérieure du tambour par un dispositif d'actionnement comprenant un actionneur (151) et un dispositif de rappel (12, 152) et sont à nouveau desserrées.

4. Frein à tambour (1) selon la revendication 1, **caractérisé en ce que** la couche de frottement céramique (111, 141) est une céramique au carbure de silicium renforcée par des fibres de carbone.

5. Frein à tambour (1) selon la revendication 3, **caractérisé en ce que** l'actionneur (151) presse mécaniquement sur les mâchoires de frein (14) vers l'extérieur dans la direction de la surface intérieur du tambour (11).

6. Frein à tambour (1) selon la revendication 3, **caractérisé en ce que** l'actionneur (151) est actionné par un organe de commande électromécanique choisi parmi un organe de commande piézoélectrique et un organe de commande électromagnétique.

7. Frein à tambour (1) selon la revendication 3, **caractérisé en ce que** l'actionneur (151) est actionné par un organe de commande mécanique choisi parmi un organe de commande pneumatique et un organe de commande hydraulique.

8. Frein à tambour (1) selon la revendication 3, **caractérisé en ce que** l'actionneur est réalisé sous forme de disque de came (151) avec au moins une came par mâchoire de frein, les mâchoires de frein (14) étant pressées dans la direction de la surface intérieure du tambour (11) par rotation du disque de came (151).

9. Frein à tambour (1) selon la revendication 8, **caractérisé en ce que** les mâchoires de frein (14) présentent une section transversale en forme de croissant.

10. Frein à tambour (1) selon la revendication 1, **caractérisé en ce que** les canaux (13) ouverts vers l'extérieur pratiqués au centre de la rainure en forme de coin (112) sont répartis avec une symétrie de révolution sur toute la périphérie.

11. Frein à tambour (1) selon la revendication 1, **caractérisé en ce qu'**un nombre impair de mâchoires de frein (14) est prévu.

12. Frein à tambour (1) selon la revendication 8, **caractérisé en ce que** les mâchoires de frein (14) sont guidées dans la direction radiale à travers à chaque fois au moins deux guides (1401, 14011, 1402, 14011), au moins l'un des guides étant formé par une combinaison d'un boulon (14011) et d'un trou oblong (1402).

13. Frein à tambour (1) selon la revendication 3, **caractérisé en ce que** les mâchoires de frein sont guidées par des nervures ou des douilles.

14. Frein à tambour (1) selon la revendication 13, **caractérisé en ce que** les mâchoires de frein sont réalisées en forme de goupilles arrondies ou de parallélépipèdes plats sur la surface d'engagement avec la surface intérieure du tambour, et sont guidées dans des douilles.
